# EUROPEAN PATENT SPECIFICATION

(11) **EP 4 382 772 B1**
(45) Date of publication and mention of the grant of the patent: **11.02.2026**
(21) Application number: 23214290.1
(22) Date of filing: 05.12.2023
(51) Int. Cl.: F16H 48/08, F16H 48/38, F16H 48/40, F16H 57/023, F16H 57/08

(54) **DIFFERENTIAL GEAR ASSEMBLY, DRIVETRAIN FOR A VEHICLE, METHOD FOR ASSEMBLING A DIFFERENTIAL GEAR ASSEMBLY AND METHOD FOR DISASSEMBLING A DIFFERENTIAL GEAR ASSEMBLY**
DIFFERENTIALGETRIEBEANORDNUNG, ANTRIEBSSTRANG FÜR EIN FAHRZEUG, VERFAHREN ZUR MONTAGE EINER DIFFERENTIALGETRIEBEANORDNUNG UND VERFAHREN ZUR DEMONTAGE EINER DIFFERENTIALGETRIEBEANORDNUNG
ENSEMBLE ENGRENAGE DIFFÉRENTIEL, CHAÎNE CINÉMATIQUE POUR UN VÉHICULE, PROCÉDÉ D'ASSEMBLAGE D'UN ENSEMBLE ENGRENAGE DIFFÉRENTIEL ET PROCÉDÉ DE DÉSASSEMBLAGE D'UN ENSEMBLE ENGRENAGE DIFFÉRENTIEL

(30) Priority: 05.12.2022 EP 22211467
(43) Date of publication of application: 12.06.2024
(73) Proprietor: Volvo Car Corporation, 405 31 Göteborg (SE)
(72) Inventor: STEN, Erik, 40531 Göteborg (SE)
(74) Representative: Maiwald GmbH

(56) References cited:
- EP-A1- 2 074 339
- EP-A1- 4 015 872
- DE-A1- 102019 123 969
- US-A1- 2004 116 235

## Description

### TECHNICAL FIELD

The present invention relates to a differential gear assembly.

Moreover, the present invention is directed to a drivetrain for a vehicle comprising such a differential gear assembly.

Additionally, the present invention relates to a method for assembling a differential gear assembly and a method for disassembling a differential gear assembly.

### BACKGROUND ART

Nearly every motor-driven vehicle uses a differential gear assembly. A differential gear assembly usually comprises three shafts or three connection elements for shafts. One of the shafts or one of the connection elements is used to connect the differential gear assembly to a traction motor. The remaining two shafts or the remaining two connection elements are connected to a respective wheel or a respective drive shaft for a wheel. The two wheels or the two drive shafts are associated to the same axle. Using a differential gear assembly allows the wheels of this axle to rotate at a different rotational speeds. In other words, the differential gear assembly can reliably compensate different rotational speeds of the wheels of one axle. This is especially relevant if the vehicle drives along a curved trajectory.

Consequently, the differential gear assembly needs to be configured such that it is able to mechanically stand the driving power to be transmitted to the wheels. At the same time, the differential gear assembly shall be easy to manufacture and assemble. It is obvious that the requirement of mechanical stability, easy manufacture and easy assembly may form a conflict of objectives.

EP 2 074 339 A1 relates to a method for producing a differential, especially for a car or a truck, wherein the differential has a housing element, in which a bevel gear is mountable inside a middle region of the housing element.

DE 10 2019 123 969 A1 relates to a method for producing a differential gear, comprising the steps: - Providing a first and a second housing shell, which each carry a hollow-cylindrical, axially outwardly extending bearing stub on their shell bottom, which is perforated in the middle, - Providing a drive wheel blank with a central recess and applying a ring gear onto the outer circumference of the drive wheel blank to obtain a drive wheel and - Assembling the housing shells and the drive wheel to obtain a gear housing rigidly surrounded by the ring gear of the drive wheel.

EP 4 015 872 A1 discloses a differential gear assembly comprising: an annular ring gear having an internal surface and an external surface, where the ring gear is arranged to rotate around a rotational axis extending in an axial direction; a first side gear configured for distributing a first output torque to a first drive shaft, and a second side gear configured for distributing a second output torque to a second drive shaft; a first differential pinion gear and a second differential pinion gear, where the first differential pinion gear and the second differential pinion gear are configured for engaging the first side gear and the second side gear; a pinion pin extending diametrically across the ring gear, where the first differential pinion gear and the second differential pinion gear are rotatably arranged on the pinion pin.

US 2004/116235 A1 describes a differential mechanism including a housing portion having a generally annular wall with a generally annular inner surface. The annular wall defines an open end of the housing portion. The lid is affixed to the open end forming an enclosure with the housing portion. The opposing side bevel gears are in driving engagement with at least one bevel pinion assembly.

### SUMMARY

It is therefore an objective of the present invention to provide a differential gear assembly which at least mitigates the above-mentioned conflict of objectives.

The problem is at least partially solved or alleviated by the subject matter of the independent claims of the present invention, wherein further examples are incorporated in the dependent claims.

According to a first aspect, there is provided a differential gear assembly comprising a ring-shaped gear being rotatable around an axis. Moreover, the differential gear assembly comprises a bevel gear unit with four bevel gears being supported on a bevel gear carrier. Two out of the four bevel gears are additionally supported on a cross shaft extending through the bevel gear carrier. The ring-shaped gear comprises at least two primary contact surfaces having a spherical shape. Furthermore, the bevel gear carrier comprises at least two secondary contact surfaces having a spherical shape. Each of the secondary contact surfaces contacts an associated primary contact surface. Two reception slots are arranged on the ring-shaped gear and an end of the cross shaft is received in each of the two reception slots such that the ends and the reception slots form a positive locking being effective in a circumferential direction of the ring-shaped gear. In this context, a positive locking of the part on which the reception slots are performed and the ends of the cross shaft is to be understood as an arrangement of the part and the ends of the cross shaft such that in a case in which a relative movement of the part with respect to the ends of the cross shaft is intended along the circumferential direction, this movement is blocked since the part on which the reception slots are provided and the ends of the cross shaft block the respective other part from moving. Consequently, the cross shaft and the bevel gear carrier are reliably supported on the ring-shaped gear. This has the effect that the differential gear assembly is able to support common torques and drive powers in vehicles. At the same time, providing the ring-shaped gear, the bevel gear carrier and the cross shaft as separate components which are connected via the two reception slots and the resulting positive locking renders manufacturing and assembly of these parts particularly easy. Moreover, a differential gear assembly having the above-explained configuration is light-weight since all of the separate parts, i.e. the ring-shaped gear, the bevel gear carrier and the cross shaft may be designed in a weight-optimized manner. This means that the geometry and the material of these parts may be chosen substantially independent from one another.

According to the present invention, one of the reception slots separates each of the at least two primary contact surfaces into two spherical surface portions. In simplified words, each of the reception slots is arranged in one of the at least two primary contact surfaces. As a consequence thereof, the differential gear assembly is compact. Moreover, it is easy to assemble since the interfaces between the ring-shaped gear and the bevel gear unit are located in the same region.

In an example, the primary contact surfaces and the secondary contact surfaces may be oriented in a radial direction with respect to the axis of the ring-shaped gear. This means that a normal on the respective primary contact surface and the respective secondary contact surface has a component of extension in the radial direction. In an example, the component extending in the radial direction is the biggest component of extension of the normal on the respective primary contact surface or the respective secondary contact surface. In such a case, the primary contact surfaces and the secondary contact surfaces also form an abutment in the radial direction. Thus, the ring-shaped gear and the bevel gear unit are in a defined relative position with respect to the radial direction.

In an example, the bevel gear unit is arranged centrally inside the ring-shaped gear. In this context, being arranged centrally means being arranged concentrically with respect to the axis of the ring-shaped gear. This configuration has the effect that the differential gear assembly is compact. At the same time, the differential gear assembly is balanced around the axis of the ring-shaped gear.

A further effect of the configuration of the differential gear assembly of the present invention is that the ring-shaped gear can be designed such that its biggest transversal section is less than 200 cm², in particular less than 150 cm². The transversal section is for example extending in a radial direction with respect to the axis of the ring-shaped gear. Such a design makes the ring-shaped gear eligible for being manufactured using a powder metal technology. In other words, an additive or generative manufacturing technology may be used in order to produce the ring-shaped gear. Using such a manufacturing technology has the advantage that a lightweight ring-shaped gear may be manufactured.

In an example, a depth direction of the two reception slots extends in a radial direction of the ring-shaped gear. Additionally or alternatively, a length direction of the two reception slots extends in an axial direction of the ring-shaped gear. Further additionally or alternatively, a width direction of the two reception slots extends in a circumferential direction of the ring-shaped gear. Such a reception slot is easy to be manufactured using both conventional, i.e. subtractive, manufacturing technologies and additive manufacturing technologies. At the same time, the two reception slots are well suitable for forming the positive locking being effective in a circumferential direction of the ring-shaped gear.

In an example, each primary contact surface is arranged at an end of an associated support arm of the ring-shaped gear extending radially inwards. Thus, by providing support arms of different length, a difference in diameter between the ring-shaped gear and the bevel gear unit may be bridged in a mechanically stable and low-weight manner.

In an example, the support arms are formed as an integral portion of the ring-shaped gear. This means that a ring-shaped body of the ring-shaped gear and the support arms are formed as a single part. Consequently, no assembly is necessary in respect of the support arms. Moreover, such a ring-shaped gear may be designed and manufactured in a weight-optimized manner.

In a further example, the support arms are equally distributed over a circumference of the ring-shaped gear. Thus, if two support arms are provided, they have an angular distance of 180°. In a case in which four support arms are provided, they have an angular distance of 90° and so on. Equally distributing the support arms renders the differential gear assembly mechanically stable.

In an example, the ring-shaped gear comprises at least one reinforcement web extending between a free end of one of the support arms and a ring-shaped body of the ring-shaped gear. This means that the reinforcement web extends from a position adjacent to a radially inner end of the associated support arm or at least extends from a radially inner half of the associated support arm. In doing so, the mechanical stability of the associated support arm is increased. For example, the stability or stiffness of the associated support arm against bending is enhanced.

In an example, the ring-shaped gear comprises at least two reinforcement webs, wherein the at least two reinforcement webs extend from circumferentially opposite sides of the associated support arm. This further enhances the mechanical stability of the support arm.

According to a further example, one or two reinforcement webs are provided for each support arm of the ring-shaped gear. This leads to a particularly high mechanical stability.

In an example, the at least one reinforcement web is formed integrally with the remaining components of the ring-shaped gear. This means that no assembly steps are necessary in order to provide the reinforcement web. Thus, more generally speaking, the production of the ring-shaped gear with at least one reinforcement web may be efficient.

In an example, a center of the spherical shape of the two primary contact surfaces lies on the axis. It is understood that the center is a virtual point. Consequently, assembling and disassembling the differential gear assembly is easy since the primary contact surfaces and the secondary contact surfaces may be moved into contact with each other or out of contact by turning the respective parts around a point on the axis of the ring-shaped gear.

In an example, a center of the spherical shape of the two secondary contact surfaces lies on the axis. As before, the center is a virtual point. This also facilitates the assembly and disassembly of the differential gear assembly since the primary contact surfaces and the secondary contact surfaces may be moved into contact with each other or out of contact by turning the respective parts around a point on the axis of the ring-shaped gear.

In an example, the primary contact surfaces and the secondary contact surfaces have the same radius. This means that in an assembled state of the differential gear assembly, a two-dimensional contact exists between the associated primary and secondary contact surfaces. This enhances the mechanical stability of the differential gear assembly.

In an example, the ends of the cross shaft are laterally flattened. This means that a cross-section of the ends of the cross shaft has at least one flat or planar section. In a special case, the cross-sections of the ends of the cross shaft have a rectangular or square cross-section. Thus, a contact between the ends of the cross shaft and the corresponding reception slot may be two-dimensional. This renders the differential gear assembly mechanically stable.

In another example, at least on axial end face of the cross shaft is spherical or rounded. A radius of the spherical or rounded end face may equal half a length of the cross shaft. This configuration has the effect that the ends of the cross shaft may be arranged in the corresponding reception slots by performing a rotatory movement. At the same time, play along a middle axis of the cross shaft is reduced.

In a further example, the flat surfaces of the laterally flattened ends of the cross shaft point into a circumferential direction. This means that a normal on the respective flat surfaces is oriented in the circumferential direction. Thus, the differential gear assembly is configured to transfer high drive powers between the cross shaft and the ring-shaped gear along the circumferential direction of the ring-shaped gear.

In an example, an opening is provided in each of the at least two secondary contact surfaces. The cross shaft extends through each of the openings. This leads to a compact design of the differential gear assembly. Moreover, assembly of the differential gear assembly is easy since the necessary interfaces are located in the same region.

In an example, the openings are arranged at a center of the associated secondary contact surface. Thus, the secondary contact surfaces are symmetric in this respect. Consequently, forces or torques to be transmitted via the secondary contact surfaces may be transmitted in a symmetric manner.

In an example, the bevel gear carrier comprises four bevel support surfaces having a spherical shape. Each of the bevel support surfaces contacts one of the four bevel gears. In this context, a spherical shape means that the associated surface is shaped as a portion of an outer skin surface of a sphere. It is understood that the backsides of the four bevel gears contacting the bevel support surfaces may also have a spherical shape. The spherical shape of the bevel support surfaces has the effect that a mechanical stability of the bevel gear carrier is enhanced. This leads to a reduced level of deformation during use of the differential gear assembly.

In an example, a wall thickness of the bevel gear carrier varies by 10% or less. In this context, the variation of the wall thickness is calculated by measuring the biggest and the smallest wall thickness of the gear carrier. Based thereon, a difference between the biggest and the smallest wall thickness may be determined. The variation of the wall thickness equals to the ratio between the difference and the smallest measured wall thickness. Such a configuration of the bevel gear carrier makes it possible to manufacture the bevel gear carrier from a sheet material, especially from sheet metal. Thus, a mechanically stable bevel gear carrier may be provided. At the same time, the bevel gear carrier is lightweight and may be manufactured in a cost-efficient manner. The latter is especially the case when considering high production volumes of the bevel gear carrier.

An example, the bevel gear carrier is ring-shaped. This means that the bevel gear carrier has a circumferentially closed geometry. A cross-section of the ring-shaped geometry may be circular or polygonal. Also combinations thereof are possible which leads to a cross-section of the ring-shaped geometry which is irregular. In an example, the cross-section of the ring-shaped geometry is generally rectangular or square.

In an example, a bearing support surface facing radially inwards is arranged on the ring-shaped gear. The bearing supports surface may be of cylindrical shape. In a special case, the bearing support surface is arranged on a radial inside of a ring-shaped body of the ring-shaped gear, wherein on a radial outside of the ring-shaped body teeth of the ring-shaped gear are arranged. Consequently, the ring-shaped gear may be reliably supported on a housing of the differential gear assembly.

In an example, the differential gear assembly further comprises a bearing. An outer support surface of the bearing contacts the bearing support surface of the ring-shaped gear. As has already been explained above, using such a bearing leads to the fact that the ring-shaped gear may be reliably supported on a housing of the differential gear assembly.

In an example, each pair of a primary contact surface and a secondary contact surface contacting each other forms a positive locking being effective in an axial direction. In this context, a positive locking of the primary contact surface and a secondary contact surface is to be understood as an arrangement of the primary contact surface and the secondary contact surface such that in a case in which a relative movement of the primary contact surface with respect to the secondary contact is intended along the axial direction, this movement is blocked since the primary contact surface and the secondary contact surface block the respective other one from moving. This positive locking may be based on the fact that the primary contact surfaces and the secondary contact surfaces have a spherical shape. Thus, when trying to move the ring-shaped gear with respect to the bevel gear carrier along the axis of the ring-shaped gear, the primary contact surfaces and the secondary contact surfaces abut against each other. Consequently, the bevel gear unit and the ring-shaped gear are reliably connected.

It is noted that each pair of a primary contact surface and a secondary contact surface contacting each other also may form a positive locking being effective in a radial direction.

According to an example, the ring-shaped gear may be a chain wheel or a belt wheel or a toothed gear. In this context, a chain wheel may as well be called a chain sprocket. In an example in which the ring-shaped gear is a toothed gear, the teeth may be oriented along an axial direction of the ring-shaped gear. In another example, the teeth may be inclined with respect to an axial direction of the ring-shaped gear. Toothed gears, chain wheels and belt wheels allow to provide power to the differential gear assembly in an efficient and reliable manner. The examples in which the ring-shaped gear is a toothed gear with teeth oriented along an axial direction or in which the ring-shaped gear is a chain wheel or in which the ring-shaped gear is a belt wheel, no or just very small axial forces act on the differential gear assembly when supplying power. This has the effect that a bearing supporting the ring-shaped gear may be structurally simple and/or comparatively small. In the example in which the ring-shaped gear is a toothed gear with teeth inclined with respect to an axial direction, comparatively high powers may be transmitted into the differential gear assembly.

According to a second aspect, there is provided a drivetrain for a vehicle comprising a differential gear assembly of the present invention. This drivetrain may be suitable for both electric vehicles and vehicles being powered by an internal combustion engine. In the first case, a gear being drivingly coupled to an electric traction machine may engage the ring-shaped gear. In a second case, a gear being drivingly connected to an output shaft of the internal combustion engine may engage the ring-shaped gear. In both cases, a transmission unit may be drivingly interposed between the ring-shaped gear and the electric traction machine or the internal combustion engine respectively. In all cases, the differential gear assembly is compact and thus renders the drivetrain compact. Moreover, as has already been mentioned above, the differential gear assembly is simple to be manufactured and assembled and, thus, the same applies to the drivetrain as a whole. Moreover, since the differential gear assembly is lightweight, also the drive train is lightweight.

According to a third aspect, there is provided a method for assembling a differential gear assembly. The method comprises:
- providing a ring-shaped gear with at least two primary contact surfaces having a spherical shape and two reception slots,
- providing a bevel gear unit with four bevel gears being supported on a bevel gear carrier, wherein two out of the four bevel gears are additionally supported on a cross shaft extending through the bevel gear carrier, wherein the bevel gear carrier comprises at least two secondary contact surfaces having a spherical shape,
- arranging the bevel gear unit in an interior of the ring-shaped gear such that each of the secondary contact surfaces is located at an angular distance from the associated primary contact surface and such that the cross shaft is inclined with respect to a middle plane of the ring-shaped gear,
- bringing each of the at least two secondary contact surfaces in contact with one of the at least two primary contact surfaces by turning the bevel gear unit in the middle plane of the ring-shaped gear until each end of the cross shaft is located axially adjacent to one of the reception slots, and
- moving the ends of the cross shaft into the associated reception slot by turning the bevel gear unit around an axis lying inside the middle plane and being oriented perpendicular to the cross shaft.

Thus, the bevel gear unit may be assembled to the ring-shaped gear by performing two consecutive relative rotations of the bevel gear unit with respect to the ring-shaped gear. Such an assembly may be performed in a quick manner. Moreover, such an assembly is relatively easy. No tools are needed. At the same time, a mechanically stable and reliable connection between the bevel gear unit and the ring-shaped gear is created.

It is noted that the method for assembling a differential gear assembly may be performed in connection with the differential gear assembly of the present invention. The same effects and advantages that have been described above also apply to this case.

According to a fourth aspect, there is provided a method for disassembling a differential gear assembly. The method comprises:
- providing a differential gear assembly with a ring-shaped gear with at least two primary contact surfaces having a spherical shape and two reception slots, and a bevel gear unit with four bevel gears being supported on a bevel gear carrier, wherein two out of the four bevel gears are additionally supported on a cross shaft extending through the bevel gear carrier, wherein the bevel gear carrier comprises at least two secondary contact surfaces having a spherical shape, wherein each of the secondary contact surfaces contacts an associated primary contact surface, and wherein an end of the cross shaft is received in each of the two reception slots,
- moving the ends of the cross shaft out of the associated reception slot by turning the bevel gear unit around an axis lying inside the middle plane and being oriented perpendicular to the cross shaft, until each end of the cross shaft is located axially adjacent to one of the reception slots,
- separating each of the at least two secondary contact surfaces from the associated primary contact surface by turning the bevel gear unit in the middle plane of the ring-shaped gear, until each of the secondary contact surfaces is located at an angular distance from the associated primary contact surface,
- withdrawing the bevel gear unit from the interior of the ring-shaped gear along an axial direction of the ring-shaped gear.

Thus, the bevel gear unit may be disassembled from the ring-shaped gear by performing two consecutive relative rotations of the bevel gear unit with respect to the ring-shaped gear. Such a disassembly may be performed in a quick manner. Moreover, such an disassembly is relatively easy. No tools are needed.

It is noted that the method for disassembling a differential gear assembly may be performed in connection with the differential gear assembly of the present invention. The same effects and advantages that have been described above also apply to this case.

In a case in which the ring-shaped gear comprises support arms, the middle plane of the ring-shaped gear may be defined by a middle plane of the support arms.

It should be noted that the above examples may be combined with each other as defined by the appended claims.

### BRIEF DESCRIPTION OF DRAWINGS

Examples of the invention will be described in the following with reference to the following drawings.
- Figure 1: shows a vehicle having a drivetrain according to the present invention with a differential gear assembly according to the present invention,
- Figure 2: shows the differential gear assembly of Figure 1 in a more detailed, perspective view, wherein a differential gear housing is not shown,
- Figure 3: shows the differential gear assembly of Figure 2 from a different perspective,
- Figure 4: shows a sectional view of the differential gear assembly of Figure 3 taken in plane IV of Figure 3,
- Figure 5: shows a bevel gear carrier of the differential gear assembly of Figures 1 to 4 in a separate, perspective representation,
- Figure 6: shows a ring-shaped gear of the differential gear assembly of Figures 1 to 4 in a separate, perspective representation,
- Figure 7: shows the differential gear assembly of Figures 1 to 4 during assembly or disassembly,
- Figure 8: shows a vehicle according to another example, having a drivetrain according to another example of the present invention with a differential gear assembly according to another example of the present invention,
- Figure 9: shows the differential gear assembly of Figure 8 in a more detailed, perspective view, wherein a differential gear housing is not shown,
- Figure 10: shows a ring-shaped gear of the differential gear assembly of Figures 8 and 9 in a separate, perspective representation,
- Figure 11: shows a bevel gear carrier of the differential gear assembly of Figures 8 to 10 in a separate, perspective representation, and
- Figures 12 to 16: illustrate a method for producing the bevel gear carrier of Figure 11.

### DETAILED DESCRIPTION

The Figures are merely schematic representations and serve only to illustrate examples of the invention. Identical or equivalent elements are in principle provided with the same reference signs.

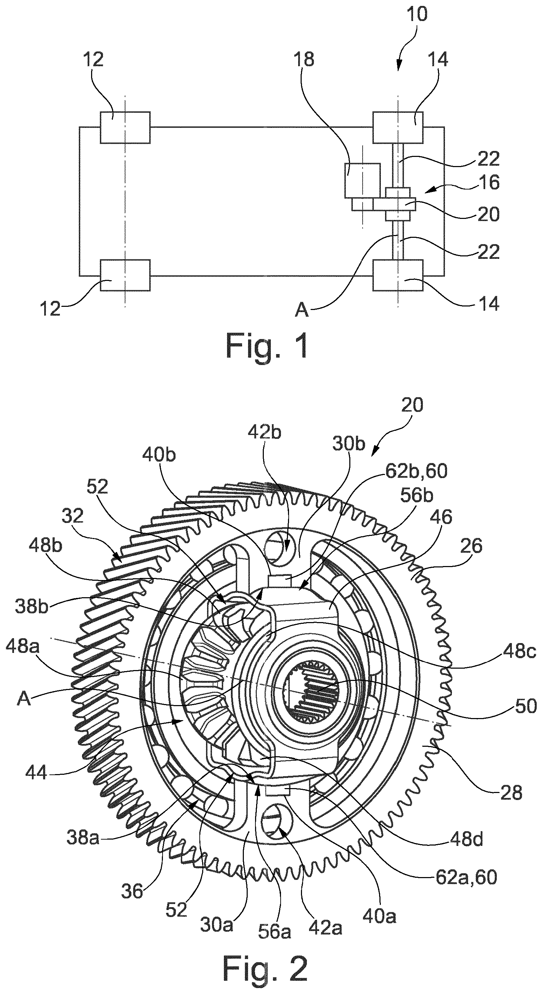

Figure 1 shows a vehicle 10 which in the present example is an electric vehicle.

The vehicle comprises a pair of front wheels 12 and a pair of rear wheels 14.

In order to drive the real wheels 14, the vehicle 10 comprises a drivetrain 16.

The drivetrain 16 comprises an electric traction machine 18, a differential gear assembly 20 and two axle drive shafts 22.

In this context, the electric traction machine 18 is drivingly coupled to the differential gear assembly 20 and the two axle drive shafts 22 drivingly connect one of the rear wheels 14 to the differential gear assembly 20 respectively.

The differential gear assembly 20 is shown in more detail in Figures 2 to 4.

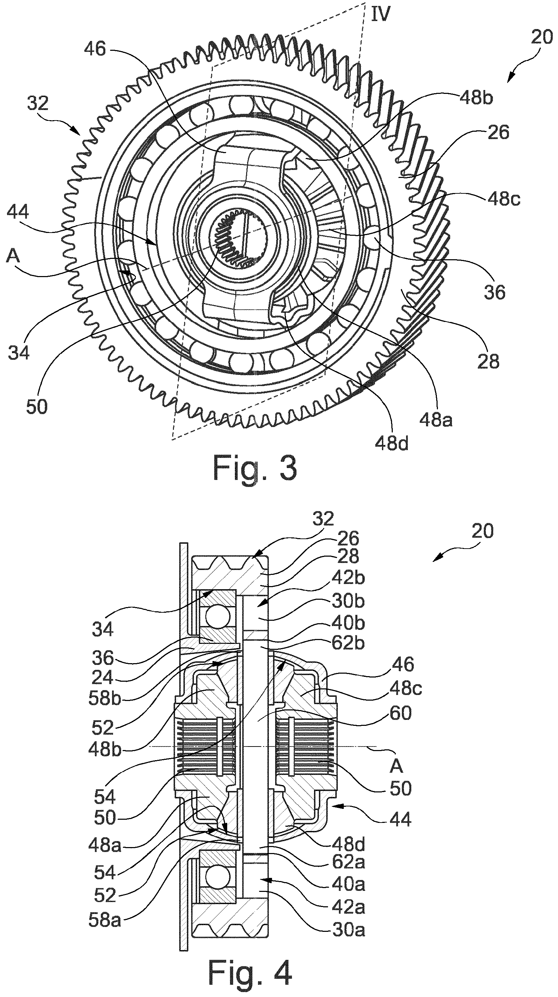

It is noted that a differential gear housing 24 of the differential gear assembly 20 is only represented in Figure 4. The differential gear housing 24 supports the differential gear assembly 20 on a structure of the vehicle 10.

In Figure 4, only a portion of the differential gear housing 24 is represented. The remaining portions are not shown for the ease of illustration.

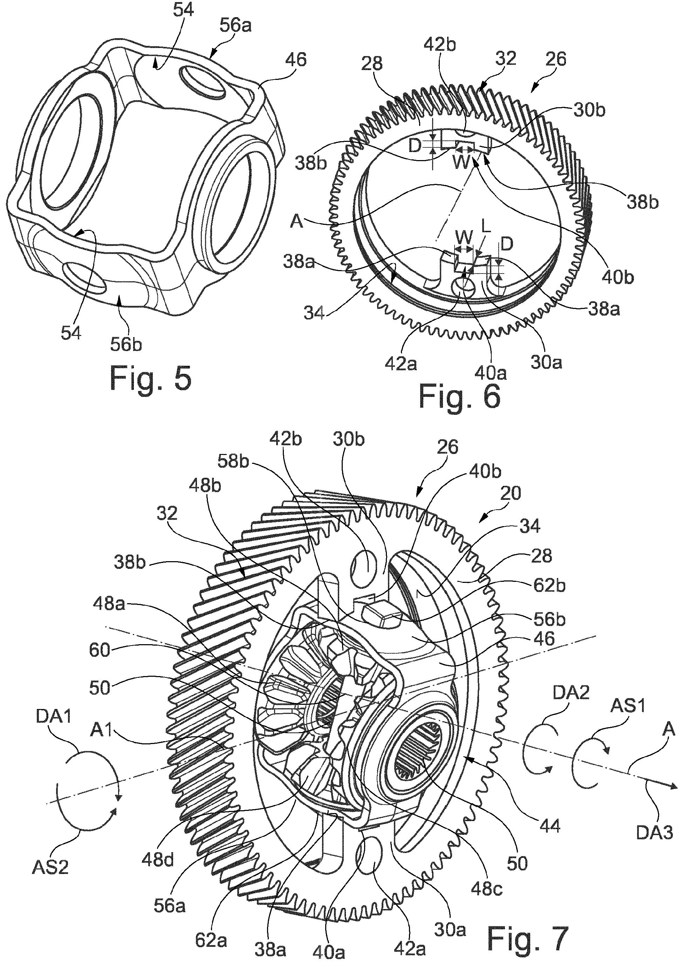

The differential gear assembly 20 comprises a ring-shaped gear 26 which is rotatable around an axis A (see also Figure 6).

The ring-shaped gear 26 is composed of a ring-shaped body 28 and two support arms 30a, 30b.

The support arms 30a, 30b both extend in a radial inward direction from the ring-shaped body 28. Moreover, the support arms 30a, 30b are equally distributed around the circumference of the ring-shaped gear 26, i.e. around the circumference of the ring-shaped body 28.

This means that the support arms 30a, 30b have an angular distance of 180° with respect to the axis A.

The support arms 30a, 30b and the ring-shaped body 28 are formed as an integral part.

In the present example, the ring-shaped gear 26 is made from metal powder.

On an outer circumference of the ring-shaped body 28, a toothing 32 is provided which is configured to engage a toothing of a pinion being mounted to an output shaft of the electric traction machine 18.

Additionally, on an inner circumference of the ring-shaped body 28, a bearing support surface 34 is arranged. The bearing support surface 34 faces radially inwards.

In the present example, a bearing 36 is arranged inside the ring-shaped body 28, i.e. inside the ring-shaped gear 26 such that an outer surface of the bearing 36 contacts the bearing support surface 34.

As can best be seen from Figure 4, the bearing 36 rotatably supports the ring-shaped gear 26 on the differential gear housing 24. This means that the ring-shaped gear 26 is rotatable with respect to the differential gear housing 24 and around the axis A due to the fact that it is supported on the differential gear housing 24 via the bearing 36.

In the present example, the bearing 36 is a roller bearing.

The bearing 36 may be axially fixed on the differential gear housing 24 and on the ring-shaped gear 26 using retaining rings, e.g. so-called Seeger rings.

Moreover, on the radial inner end of each of the support arms 30a, 30b, a primary contact surface 38a, 38b is arranged.

Both the primary contact surfaces 38a, 38b have a spherical shape. This means that both primary contact surfaces 38a, 38b are formed as portions of an outer surface of a sphere.

Due to the fact that the support arms 30a, 30b are extending in a radially inward direction from the ring-shaped body 28, both primary contact surfaces 38a, 38b are facing radially inwardly. This means that a normal on each of the primary contact surfaces 38a, 38b has a radially inward orientation.

In this context, a center of the sphere-shape of both primary contact surfaces 38a, 38b lies on the axis A.

Moreover, on each of the support arms 30 a, 30 B a reception slot 40 a, 40b is arranged.

More precisely, each of the reception slots 40a, 40b separates one of the primary contact surfaces 38a, 38b in two surface portions.

In the present example, the reception slot 40a separates primary contact surface 38a in two surface portions and reception slot 40B separates primary contact surface 38b in two surface portions.

In the present example, a depth direction D of the reception slots 40a, 40b extends in a radial direction of the ring-shaped gear 26, more precisely in a radial outward direction (cf. Figure 6).

Moreover, a length direction L of the reception slots 40a, 40b extends in parallel to the axis A, i.e. in an axial direction of the ring-shaped gear 26.

Additionally, a width direction W of the reception slots 40a, 40b extends in a circumferential direction of the ring-shaped gear 26.

Beyond that, an opening 42a, 42b is provided in each of the support arms 30a, 30b. The openings 42a, 42b the to a weight reduction of the ring-shaped gear 26.

The differential gear assembly 20 also comprises a bevel gear unit 44.

The bevel gear unit is composed of a bevel gear carrier 46 on which four bevel gears 48a, 48b, 48c, 48d are rotatably supported.

The bevel gear carrier 46 is substantially ring-shaped with a substantially rectangular cross-section (see also Figure 5). All four bevel gears 48a, 48b, 48c, 48d are arranged in an interior of the ring-shaped bevel gear carrier 46.

Moreover, in the present example, the bevel gear carrier 46 has a substantially uniform wall thickness since it is made from sheet metal.

In this context, bevel gears 48a and 48c are arranged on opposing sides of the bevel gear carrier 46 and are rotatable around the same axis of rotation.

Moreover bevel gears 48a and 48c comprise a connection spline 50 respectively which is configured to be connected to the respective axle drive shafts 22, if the differential gear assembly 20 is mounted in the drivetrain 16.

Also bevel gears 48b, 48d are arranged on opposing sides of the bevel gear carrier 46 and are rotatable around a common axis of rotation. However, the axis of rotation of bevel gears 48b and 48d is oriented perpendicular to the common axis of rotation of bevel gears 48a and 48c.

Beyond that, bevel gear 48a engages bevel gear 48b and bevel gear 48d. Bevel gear 48c engages bevel gear 48b and bevel gear 48d.

Since the interaction of bevel gears 48a, 48b, 48c, 48d within a differential gear assembly 20 is generally known, a description thereof is omitted here.

Bevel gears 48b and 48d comprise a backside 52 having a spherical shape respectively.

Each of these backside 52 is supported on a corresponding bevel support surface 54 of the bevel gear carrier 46 which also has a spherical shape.

The bevel support surfaces 54 are, thus, arranged on an inside of the ring-shaped bevel gear carrier 46.

As has been mentioned before, the bevel gear carrier 46 has a substantially uniform wall thickness. Thus, neighboring the bevel support surface 54 on an exterior side of the bevel gear carrier 46 secondary contact surfaces 56a, 56b are provided.

The secondary contact surfaces 56a, 56b have a spherical shape.

Again, a center of the spherically shaped contact surfaces 56a, 56b lies on the axis A.

A radius of the primary contact surfaces 38a, 38b and the secondary contact surfaces 56a, 56b is identical.

Thus, in a mounted condition of the differential gear assembly 20, primary contact surface 38a contacts secondary contact surface 56a in a two-dimensional manner. Moreover, primary contact surface 38b contacts secondary contact surface 56b in a two-dimensional manner.

Beyond that, an opening 58a, 58b is provided at the center of each of the secondary contact surfaces 56a, 56b. These openings 58a, 58b extend through the bevel gear carrier 46 such that also the bevel gear support surfaces 54 have an opening at the respective center thereof.

A cross shaft 60 extends through both openings 58a, 58b and additionally through both bevel gears 48b, 48d.

In other words, the bevel gears 48b, 48d are supported on the cross shaft 60.

The cross shaft 60 has two ends 62 a, 62b which are laterally flattened such that the end 62a, 62b have a substantially square cross-section.

In a mounted condition of the differential gear assembly 20, end 62a is received in reception slot 40a and end 62b is received in reception slot 40b.

A width of the ends 62a, 62b substantially corresponds to a width of the corresponding reception slot 40a, 40b.

Consequently, the ends 62a, 62b and the corresponding reception slots 40a, 40b form a positive locking being effective in a circumferential direction of the ring-shaped gear 26.

Moreover, the primary contact surfaces 38a, 38b and the secondary contact surfaces 56a, 56b contacting each other pairwise form positive lockings being effective in an axial direction respectively. This is due to the fact that the primary contact surfaces 38a, 38b and the secondary contact surfaces 56a, 56b are shaped spherically.

In summary, in the assembled condition of the differential gear assembly 20, a driving power or driving torque may be reliably transferred from the ring-shaped gear 26 to the connections splines 50 of the bevel gears 48a, 48c.

If necessary, the differential gear assembly 20 can be disassembled using a method for disassembling a differential gear assembly. This will be explained in the following with reference to Figure 7.

In a first step of this method, the differential gear assembly 20 with its ring-shaped gear 26 having two primary contact surfaces 38a, 38b with a spherical shape and two reception slots 40a, 40b is provided. The differential gear assembly 20 also has a bevel gear unit 44 with four bevel gears 48a, 48b, 48c, 48d being supported on a bevel gear carrier 46, wherein two out of the four bevel gears 48a, 48b, 48c, 48d are additionally supported on the cross shaft 60 extending through the bevel gear carrier 46. The bevel gear carrier 60 comprises two secondary contact surfaces 56a, 56b having a spherical shape.

As has been explained before, each of the secondary contact surfaces 56a, 56b contacts an associated primary contact surface 38a, 38b, and one of the ends 62a, 62b of the cross shaft 60 is received in each of the two reception slots 40a, 40b.

Subsequently, in a second step, the ends 62a, 62b of the cross shaft 60 are moved out of the associated reception slot 40a, 40b by turning the bevel gear unit 44 around an axis A1 lying inside the middle plane of the support arms 30a, 30b and being oriented perpendicular to the cross shaft 60. This movement is illustrated by arrow DA1 in Figure 7.

This turning motion is performed, until each end 62a, 62b of the cross shaft 60 is located axially adjacent to one of the reception slots 40a, 40b.

This condition is shown in Figure 7.

Thereafter, in a third step, the primary contact surfaces 38a, 38b and the corresponding secondary contact surfaces 56a, 56b are separated from one another by turning the bevel gear unit 44 in the middle plane and around the axis A of the ring-shaped gear 26, until each of the secondary contact surfaces 56a, 56b is located at an angular distance from the associated primary contact surface 38a, 38b. This movement is illustrated by arrow DA2 in Figure 7.

In a following fourth step, the bevel gear unit 44 is withdrawn from the interior of the ring-shaped gear 26 along an axial direction of the ring-shaped gear 26, i.e. along the axis A. This movement is illustrated by arrow DA3 in Figure 7.

The differential gear assembly 20 may also be assembled using a method for assembling a differential gear assembly.

When performing the method for assembling the differential gear assembly, the steps of the method for disassembling the differential gear assembly are essentially performed in a reverse order.

As before, in a first step of the method for assembling the differential gear assembly, the ring-shaped gear 26 with two primary contact surfaces 38a, 38b having a spherical shape and two reception slots 40a, 40b is provided. Additionally, the bevel gear unit 44 with four bevel gears 48a, 48b, 48c, 48d being supported on the bevel gear carrier 46 is provided. As has already been explained, two of the four bevel gears 48a, 48b, 48c, 48d are additionally supported on the cross shaft 60 extending through the bevel gear carrier 46.

The bevel gear carrier 46 comprises two secondary contact surfaces 56a, 56b having a spherical shape.

In a second step of the method for assembling the differential gear assembly, the bevel gear unit 44 is arranged in an interior of the ring-shaped gear 26 such that each of the secondary contact surfaces 56a, 56b is located at an angular distance from the associated primary contact surface 38a, 38b and such that the cross shaft 60 is inclined with respect to a middle plane. This means that the cross-shaft 60 is inclined as shown in figure 7, wherein, in contrast to Figure 7, the primary contact surfaces 38 a, 30 8B and the corresponding secondary contact surfaces 56 a, 50 6B are arranged at an angular distance respectively.

In a next step, each of the secondary contact surfaces 56a, 56b is brought in contact with the associated one of the primary contact surfaces 38a, 38b by turning the bevel gear unit 44 in the middle plane and around axis A of the ring-shaped gear 26 until each end 62a, 62b of the cross shaft 60 is located axially adjacent to one of the reception slots 40a, 40b. This movement is illustrated by arrow AS1 in Figure 7. While performing this rotatory motion, the cross shaft 60 stays with the same inclination.

The result of this step is illustrated in Figure 7.

Thereafter, the ends 62a, 62b of the cross shaft 60 are moved into the associated reception slots 40a, 40b by turning the bevel gear unit 44 around axis A1. This movement is illustrated by arrow AS2 in Figure 7.

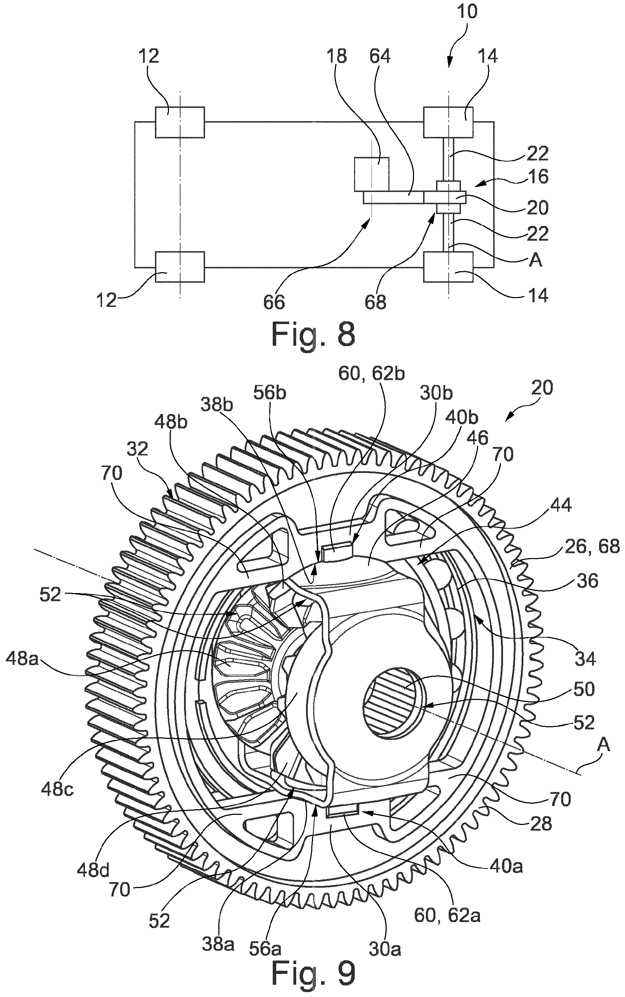

Figure 8 shows a vehicle 10 according to another example. Also the vehicle 10 of Figure 8 is an electric vehicle.

The vehicle of Figure 8 comprises a drivetrain 16 according to another example with a differential gear assembly 20 according to another example.

In the following, only the differences with respect to the examples which have been explained in connection with Figures 1 to 7 will be mentioned. For all remaining aspects, reference is made to the above explanations.

The drivetrain 16 differs from the drivetrain 16 as has been explained in connection with Figures 1 to 7 in that the electric traction machine 18 and the differential gear assembly 20 are drivingly coupled using a chain 64.

Thus, a chain wheel 66 is mounted on a drive shaft of the electric traction machine 18. Moreover, the ring-shaped gear 26 is formed as a chain wheel 68. As has been mentioned before, an alternative term for a chain wheel is a chain sprocket.

The two chain wheels 66, 68 are drivingly coupled using the chain 64.

This means that the toothing 32 is configured to interact with the chain 64. The same applies to a toothing of the chain wheel 66.

The differential gear assembly 20 is shown in more detail in Figure 9.

The differential gear assembly 20 of Figure 9 differs from the differential gear assembly 20 of Figures 1 to 7 in that the support arms 30a, 30b are designed differently.

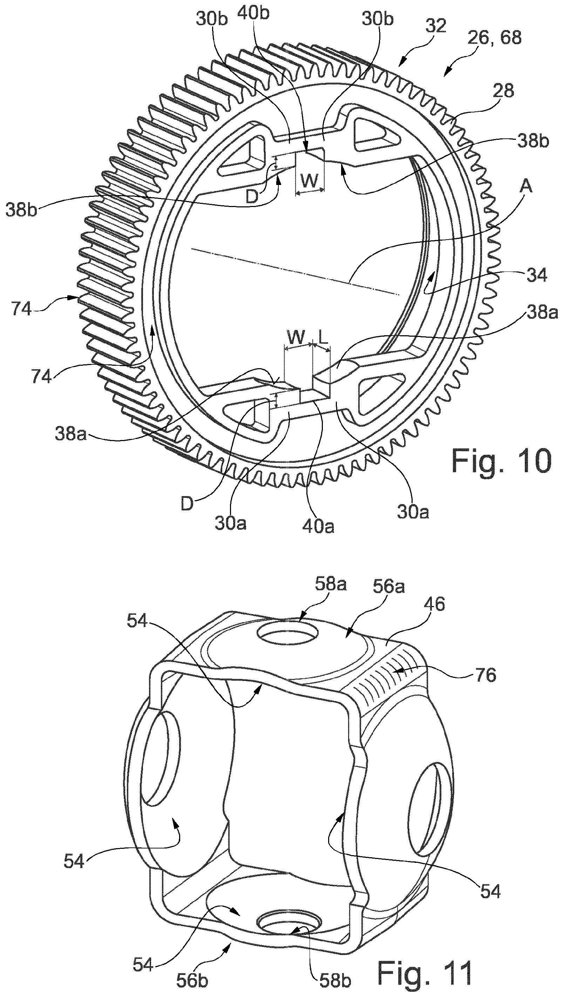

In the example of Figure 9, the support arms 30a, 30b do not comprise openings 42, i.e. the support arms 30a, 30b are continuous (see also Figure 10).

Moreover, for each of the support arms 30a, 30b, two reinforcement webs 70 are provided. For each of the support arms 30a, 30b, the associated reinforcement webs 70 are arranged on opposite circumferential sides.

Thereby, a first end of the respective reinforcement webs 70 is connected to a portion of the associated support arm 30a, 30b adjacent to a free end thereof, i.e. adjacent to the primary contact surface 38a or the primary contact surface 38b.

Respective second ends of the reinforcement webs 70 are connected to the ring-shaped body 28 of the ring-shaped gear 26.

Additionally, reinforcement webs 70 associated with the same support arm 30a, 30b extend along a common direction of extension. The common direction of extension is a secant of the ring-shaped body 28.

The direction of extension of the reinforcement webs 70 associated with the support arm 30a and the direction of extension of the reinforcement webs 70 associated with the support arm 30b are parallel.

The reinforcement webs 70, the support arms 30a, 30b and the ring-shaped body 28 form a total of four openings 72 in the ring-shaped gear 26.

In order to reduce the weight of the ring-shaped gear 26, a circular recess 74 is provided on both axial sides of the ring-shaped body 28. The circular recesses 74 extend along a circumference of the ring-shaped body 28 and have a depth oriented along an axial direction of the ring-shaped body 28.

The differential gear assembly 20 of Figure 9 additionally differs from the differential gear assembly 20 of Figures 1 to 7 in that the bevel gear unit 44, more precisely the bevel gear carrier 46, is designed differently.

As in the previous example, the four bevel gears 48a, 48b, 48c, 48d are rotatably supported on the substantially ring-shaped bevel gear carrier 46 which has a substantially rectangular cross-section (see also Figure 11). All four bevel gears 48a, 48b, 48c, 48d are arranged in an interior of the ring-shaped bevel gear carrier 46 as has been explained in connection with the previous example.

However, in the bevel gear carrier 46 of the differential gear assembly 20 of Figure 9 all four bevel support surfaces 54 have a spherical shape. This means that all four bevel support surface 54 are formed as a portion of an outer skin surface of a sphere.

In this context, all four bevel support surfaces 54 share a common center. This means that a virtual sphere could be drawn inside the bevel gear carrier 46 such that it would contact all four bevel support surfaces 54 simultaneously.

Correspondingly, in the differential gear assembly 20 of Figure 9 all bevel gears 48a, 48b, 48c and 48d comprise a backside 52 having a spherical shape respectively. The spherical shapes of the bevel gears 48a, 48b, 48c and 48d are configured such that it may contact the associated bevel support surfaces 54 in a two-dimensional manner.

The differential gear assembly 20 of Figure 9 may be disassembled using a method for disassembling a differential gear assembly 20. Moreover, the differential gear assembly 20 of Figure 9 may be assembled using a method for assembling a differential gear assembly 20. In respect of these methods reference may be made to the above explanations.

As may be seen from Figures 5 and 11, the bevel gear carrier 46 of both examples has a substantially uniform wall thickness and is made from sheet metal.

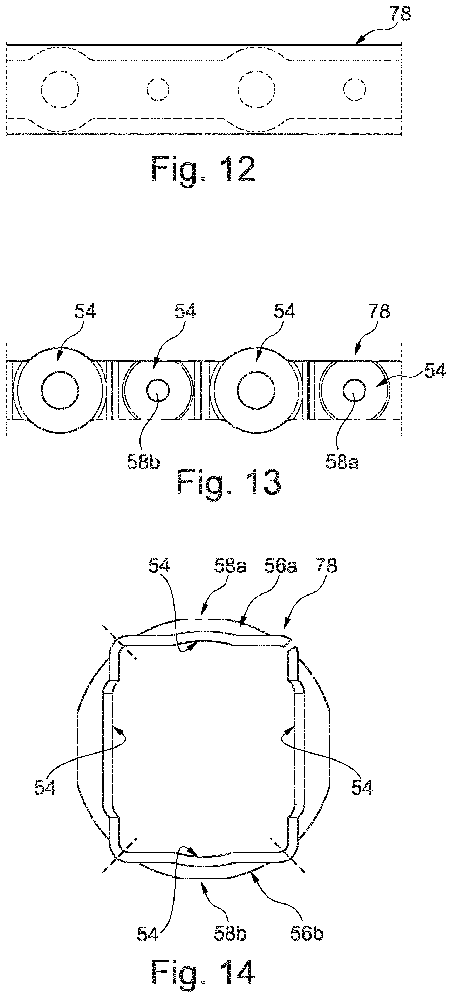

The bevel gear carrier 46 of both examples may be produced as follows (cf. Figures 12 to 16).

In a first step, a sheet metal blank 78 is provided (cf. Figure 12). The sheet metal blank 78 is a piece of sheet metal having a sufficient size in order to form the bevel gear carrier 46. In order to illustrate this fact, a contour of a flattened bevel gear carrier 46 is shown on the sheet metal blank 78 in Figure 12.

According to an alternative, the sheet metal blank 78 may already comprise openings corresponding to the openings through which the axle drive shafts 22 and the cross shaft 60 may extend in the assembled state of the differential gear assembly 20. According to a further alternative, an outer contour of the sheet metal blank 78 may already correspond to an outer contour of the bevel gear carrier 46 in a flattened state. These two alternatives may as well be combined.

In the example shown in Figures 12 to 16, these openings and/or this outer contour is not provided. Thus, the openings and the outer contour are generated in a next step, e.g. by punching or cutting. The result thereof is shown in Figure 13.

It is noted that in both cases, the provided sheet metal blank 78 is provided in a flat condition. Moreover, even though Figures 12 and 13 show a sheet metal blank 78 being sufficient for forming a single bevel gear carrier 46, it is also possible to have a sheet metal blank 78 that is sized such that a plurality of bevel gear carriers 46 may be formed from one single sheet metal blank 78.

In a subsequent step, the spherical shape of the bevel support surfaces 54 is generated by deforming the sheet metal blank accordingly (see also Figure 13).

In case a bevel gear carrier 46 for the differential gear assembly 20 of Figure 9 is formed, a total of four bevel support surfaces 54 having a spherical shape is produced. In case a bevel gear carrier 46 for the differential gear assembly 20 of Figures 1 to 7 is formed, a total of two bevel support surfaces 54 having a spherical shape is produced. Additionally, two collars extending around the remaining openings may be formed.

This is done in a substantially flat state of the sheet metal blank.

It is noted that the step of generating the openings and the outer contour of the bevel gear carrier 46 and the step of generating the spherical shape of the bevel support surfaces 54 may be combined. A single tool may be used to execute these steps.

Thereafter, the sheet metal blank 78 is transferred in to the ring shape of the bevel gear carrier 46 by bending the sheet metal blank appropriately (cf. Figure 14). In the present example, the sheet metal blank 78 is bent by substantially 90 degrees at three locations.

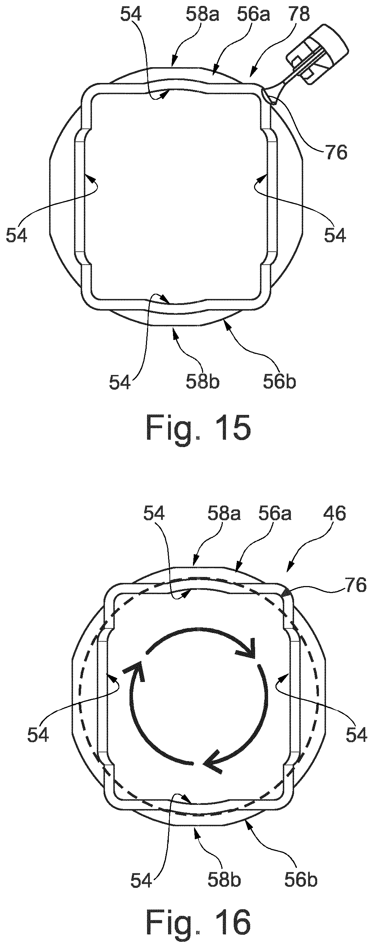

Subsequently, the two ends of the sheet metal blank 78 may be connected using a weld seam 76. This is illustrated in Figure 15. In this example, the ends of the sheet metal blank 78 are connected by MIG welding.

Thereafter, the bevel gear carrier 46 may be finished, e.g. by fine machining. This especially applies to the bevel support surfaces 54. In the present example, the bevel support surfaces 54 are finished by lathe machining. This is illustrated in Figure 16 by three curved arrows arranged on a circular line.

It is noted that even though two distinct examples of the differential gear assembly 20 have been explained above, the features of these examples may be combined. For example, the bevel gear carrier 46 and the associated bevel gears 48a, 48b, 48c, 48d having backsides 52 of spherical shape of the differential gear assembly 20 of Figure 9 may be used in the differential gear assembly 20 of Figures 1 to 7. This means that this bevel gear carrier 46 and the associated bevel gears 48a, 48b, 48c, 48d may as well be used in connection with a ring-shaped gear 26 in the form of a toothed gear with inclined teeth.

In this context it has to be noted that the inclined teeth of such a ring-shaped gear 26 lead to reaction forces oriented in an axial direction which need to be supported by the bearing 36. If the ring-shaped gear 26 is formed as a toothed gear with non-inclined teeth or as a chain wheel, such reaction forces do not exist such that the bearing 36 may be reduced in size or quality.

Other variations to the disclosed examples can be understood and effected by those skilled in the art as defined by the appended claims.

### LIST OF REFERENCE SIGNS

- 10: vehicle
- 12: front wheel
- 14: rear wheel
- 16: drivetrain
- 18: electric traction machine
- 20: differential gear assembly
- 22: axle drive shaft
- 24: differential gear housing
- 26: ring-shaped gear
- 28: ring-shaped body
- 30a: support arm
- 30b: support arm
- 32: toothing
- 34: bearing support surface
- 36: bearing
- 38a: primary contact surface
- 38b: primary contact surface
- 40a: reception slot
- 40b: reception slot
- 42a: opening
- 42b: opening
- 44: bevel gear unit
- 46: bevel gear carrier
- 48a: bevel gear
- 48b: bevel gear
- 48c: bevel gear
- 48d: bevel gear
- 50: connection spline
- 52: back side
- 54: bevel support surface
- 56a: secondary contact surface
- 56b: secondary contact surface
- 58a: opening
- 58b: opening
- 60: cross shaft
- 62a: end of the cross shaft
- 62b: end of the cross shaft
- 64: chain
- 66: chain wheel
- 68: chain wheel
- 70: reinforcement web
- 72: opening
- 74: recess
- 76: weld seam
- 78: sheet metal blank

- A: axis
- A1: axis of rotation
- AS1: arrow illustrating assembly movement
- AS2: arrow illustrating assembly movement
- DA1: arrow illustrating disassembly movement
- DA2: arrow illustrating disassembly movement
- DA3: arrow illustrating disassembly movement
- D: depth direction
- L: length direction
- W: width direction

## Claims

1. A differential gear assembly (20) comprising a ring-shaped gear (26) being rotatable around an axis (A) and a bevel gear unit (44) with four bevel gears (48a, 48b, 48c, 48d) being supported on a bevel gear carrier (46), wherein two out of the four bevel gears (48a, 48b, 48c, 48d) are additionally supported on a cross shaft (60) extending through the bevel gear carrier (46),
wherein the ring-shaped gear (26) comprises at least two primary contact surfaces (38a, 38b) having a spherical shape, the bevel gear carrier (46) comprises at least two secondary contact surfaces (56a, 56b) having a spherical shape, and each of the secondary contact surfaces (56a, 56b) contacts an associated primary contact surface (38a, 38b),
**characterized in that** two reception slots (40a, 40b) are arranged on the ring-shaped gear (26) and an end (62a, 62b) of the cross shaft (60) is received in each of the two reception slots (40a, 40b) such that the ends (62a, 62b) and the reception slots (40a, 40b) form a positive locking being effective in a circumferential direction of the ring-shaped gear (26), and
**in that** one of the reception slots (40a, 40b) separates each of the at least two primary contact surfaces (38a, 38b) into two spherical surface portions.

2. The differential gear assembly (20) of claim 1, wherein each primary contact surface (38a, 38b) is arranged at an end of an associated support arm (30a, 30b) of the ring-shaped gear (26) extending radially inwards.

3. The differential gear assembly (20) of claim 2, wherein the ring-shaped gear (26) comprises at least one reinforcement web (70) extending between a free end of one of the support arms (30a, 30b) and a ring-shaped body (28) of the ring-shaped gear (26).

4. The differential gear assembly (20) of any one of the preceding claims, wherein a center of the spherical shape of the two primary contact surfaces (38a, 38b) lies on the axis (A).

5. The differential gear assembly (20) of any one of the preceding claims, wherein a center of the spherical shape of the two secondary contact surfaces (56a, 56b) lies on the axis (A).

6. The differential gear assembly (20) of any one of the preceding claims, wherein the ends (62a, 62b) of the cross shaft (60) are laterally flattened.

7. The differential gear assembly (20) of any one of the preceding claims, wherein an opening (58a, 58b) is provided in each of the at least two secondary contact surfaces (56a, 56b) and wherein the cross shaft (60) extends through each of the openings (58a, 58b).

8. The differential gear assembly (20) of claim 7, wherein the openings (58a, 58b) are arranged at a center of the associated secondary contact surface (56a, 56b).

9. The differential gear assembly (20) of any one of the preceding claims, wherein the bevel gear carrier (46) comprises four bevel support surfaces (54) having a spherical shape, wherein each of the bevel support surfaces (54) contacts one of the four bevel gears (48a, 48b, 48c, 48d).

10. The differential gear assembly (20) of any one of the preceding claims, wherein a wall thickness of the bevel gear carrier (46) varies by 10% or less.

11. The differential gear assembly (20) of any one of the preceding claims, wherein a bearing support surface (34) facing radially inwards is arranged on the ring-shaped gear (26).

12. The differential gear assembly (20) of any one of the preceding claims, wherein each pair of a primary contact surface (38a, 38b) and a secondary contact surface (56a, 56b) contacting each other forms a positive locking being effective in an axial direction.

13. The differential gear assembly (20) of any of the preceding claims, wherein the ring-shaped gear (26) is a chain wheel or a belt wheel or a toothed gear.

14. A drivetrain (16) for a vehicle (10) comprising a differential gear assembly (20) of any one of the preceding claims.

15. A method for assembling a differential gear assembly (20), comprising:
- providing a ring-shaped gear (26) with at least two primary contact surfaces (38a, 38b) having a spherical shape and two reception slots (40a, 40b),
- providing a bevel gear unit (44) with four bevel gears (48a, 48b, 48c, 48d) being supported on a bevel gear carrier (46), wherein two out of the four bevel gears (48a, 48b, 48c, 48d) are additionally supported on a cross shaft (60) extending through the bevel gear carrier (46), wherein the bevel gear carrier (46) comprises at least two secondary contact surfaces (56a, 56b) having a spherical shape,
- arranging the bevel gear unit (44) in an interior of the ring-shaped gear (26) such that each of the secondary contact surfaces (56a, 56b) is located at an angular distance from the associated primary contact surface (38a, 38b) and such that the cross shaft (60) is inclined with respect to a middle plane of the ring-shaped gear (26),
- bringing each of the at least two secondary contact surfaces (56a, 56b) in contact with one of the at least two primary contact surfaces (38a, 38b) by turning the bevel gear unit (44) in the middle plane of the ring-shaped gear (26) until each end (62a, 62b) of the cross shaft (60) is located axially adjacent to one of the reception slots (40a, 40b),
- moving the ends (62a, 62b) of the cross shaft (60) into the associated reception slot (40a, 40b) by turning the bevel gear unit (44) around an axis (A1) lying inside the middle plane and being oriented perpendicular to the cross shaft (60).

16. A method for disassembling a differential gear assembly (20), comprising:
- providing a differential gear assembly (20) with a ring-shaped gear (26) with at least two primary contact surfaces (38a, 38b) having a spherical shape and two reception slots (40a, 40b), and a bevel gear unit (44) with four bevel gears (48a, 48b, 48c, 48d) being supported on a bevel gear carrier (46), wherein two out of the four bevel gears (48a, 48b, 48c, 48d) are additionally supported on a cross shaft (60) extending through the bevel gear carrier (46), wherein the bevel gear carrier (46) comprises at least two secondary contact surfaces (56a, 56b) having a spherical shape, wherein each of the secondary contact surfaces (56a, 56b) contacts an associated primary contact surface (38a, 38b), and wherein an end (62a, 62b) of the cross shaft (60) is received in each of the two reception slots (40a, 40b),
- moving the ends (62a, 62b) of the cross shaft (60) out of the associated reception slot (40a, 40b) by turning the bevel gear unit (44) around an axis (A1) lying inside the middle plane and being oriented perpendicular to the cross shaft (60), until each end (62a, 62b) of the cross shaft (60) is located axially adjacent to one of the reception slots (40a, 40b),
- separating each of the at least two secondary contact surfaces (56a, 56b) from the associated primary contact surface (38a, 38b) by turning the bevel gear unit (44) in the middle plane of the ring-shaped gear (26), until each of the secondary contact surfaces (56a, 56b) is located at an angular distance from the associated primary contact surface (38a, 38b),
- withdrawing the bevel gear unit (44) from the interior of the ring-shaped gear (26) along an axial direction of the ring-shaped gear (26).

## Patentansprüche

1. Differentialgetriebeanordnung (20), umfassend einen Zahnkranz (26), der um eine Achse (A) drehbar ist, und eine Kegelradeinheit (44) mit vier Kegelrädern (48a, 48b, 48c, 48d), die auf einem Kegelradträger (46) gestützt sind, wobei zwei der vier Kegelräder (48a, 48b, 48c, 48d) zusätzlich auf einer Querwelle (60) gestützt sind, die sich durch den Kegelradträger (46) hindurch erstreckt,
wobei der Zahnkranz (26) mindestens zwei primäre Kontaktflächen (38a, 38b) umfasst, die eine sphärische Form aufweisen, der Kegelradträger (46) mindestens zwei sekundäre Kontaktflächen (56a, 56b) umfasst, die eine sphärische Form aufweisen, und jede der sekundären Kontaktflächen (56a, 56b) eine zugehörige primäre Kontaktfläche (38a, 38b) kontaktiert,
**dadurch gekennzeichnet, dass** zwei Aufnahmeschlitze (40a, 40b) an dem Zahnkranz (26) angeordnet sind und ein Ende (62a, 62b) der Querwelle (60) in jedem der zwei Aufnahmeschlitze (40a, 40b) so aufgenommen ist, dass die Enden (62a, 62b) und die Aufnahmeschlitze (40a, 40b) eine in einer Umfangsrichtung des Zahnkranzes (26) wirkende formschlüssige Verbindung bilden, und
dadurch, dass einer der Aufnahmeschlitze (40a, 40b) jede der mindestens zwei primären Kontaktflächen (38a, 38b) in zwei sphärische Flächenabschnitte trennt.

2. Differentialgetriebeanordnung (20) nach Anspruch 1, wobei jede primäre Kontaktfläche (38a, 38b) an einem Ende eines zugehörigen Stützarms (30a, 30b) des Zahnkranzes (26) angeordnet ist, der sich radial nach innen erstreckt.

3. Differentialgetriebeanordnung (20) nach Anspruch 2, wobei der Zahnkranz (26) mindestens einen Verstärkungssteg (70) umfasst, der sich zwischen einem freien Ende eines der Stützarme (30a, 30b) und einem ringförmigen Körper (28) des Zahnkranzes (26) erstreckt.

4. Differentialgetriebeanordnung (20) nach einem der vorangehenden Ansprüche, wobei eine Mitte der sphärischen Form der zwei primären Kontaktflächen (38a, 38b) auf der Achse (A) liegt.

5. Differentialgetriebeanordnung (20) nach einem der vorangehenden Ansprüche, wobei eine Mitte der sphärischen Form der zwei sekundären Kontaktflächen (56a, 56b) auf der Achse (A) liegt.

6. Differentialgetriebeanordnung (20) nach einem der vorangehenden Ansprüche, wobei die Enden (62a, 62b) der Querwelle (60) seitlich abgeflacht sind.

7. Differentialgetriebeanordnung (20) nach einem der vorangehenden Ansprüche, wobei in jeder der mindestens zwei sekundären Kontaktflächen (56a, 56b) eine Öffnung (58a, 58b) vorhanden ist und wobei sich die Querwelle (60) durch jede der Öffnungen (58a, 58b) hindurch erstreckt.

8. Differentialgetriebeanordnung (20) nach Anspruch 7, wobei die Öffnungen (58a, 58b) in einer Mitte der zugehörigen sekundären Kontaktfläche (56a, 56b) angeordnet sind.

9. Differentialgetriebeanordnung (20) nach einem der vorangehenden Ansprüche, wobei der Kegelradträger (46) vier Kegelradstützflächen (54) umfasst, die eine sphärische Form aufweisen, wobei jede der Kegelradstützflächen (54) eines der vier Kegelräder (48a, 48b, 48c, 48d) kontaktiert.

10. Differentialgetriebeanordnung (20) nach einem der vorangehenden Ansprüche, wobei eine Wanddicke des Kegelradträgers (46) um 10 % oder weniger variiert.

11. Differentialgetriebeanordnung (20) nach einem der vorangehenden Ansprüche, wobei eine radial nach innen weisende Lagerstützfläche (34) an dem Zahnkranz (26) angeordnet ist.

12. Differentialgetriebeanordnung (20) nach einem der vorangehenden Ansprüche, wobei jedes Paar aus einer primären Kontaktfläche (38a, 38b) und einer sekundären Kontaktfläche (56a, 56b), die einander kontaktieren, eine in einer axialen Richtung wirkende formschlüssige Verbindung bildet.

13. Differentialgetriebeanordnung (20) nach einem der vorangehenden Ansprüche, wobei der Zahnkranz (26) ein Kettenrad oder ein Riemenrad oder ein Zahnrad ist.

14. Antriebsstrang (16) für ein Fahrzeug (10), umfassend eine Differentialgetriebeanordnung (20) nach einem der vorangehenden Ansprüche.

15. Verfahren zum Zusammensetzen einer Differentialgetriebeeinheit (20), umfassend:
- Bereitstellen eines Zahnkranzes (26) mit mindestens zwei primären Kontaktflächen (38a, 38b) mit einer sphärische und zwei Aufnahmeschlitzen (40a, 40b),
- Bereitstellen einer Kegelradeinheit (44) mit vier Kegelrädern (48a, 48b, 48c, 48d), die auf einem Kegelradträger (46) gestützt sind, wobei zwei der vier Kegelräder (48a, 48b, 48c, 48d) zusätzlich auf einer Querwelle (60) gestützt sind, die sich durch den Kegelradträger (46) hindurch erstreckt, wobei der Kegelradträger (46) mindestens zwei sekundäre Kontaktflächen (56a, 56b) umfasst, die eine sphärische Form aufweisen,
- Anordnen der Kegelradeinheit (44) in einem Inneren des Zahnkranzes (26) so, dass sich jede der sekundären Kontaktflächen (56a, 56b) in einem Winkelabstand von der zugehörigen primären Kontaktfläche (38a, 38b) befindet, und so, dass die Querwelle (60) in Bezug auf eine Mittelebene des Zahnkranzes (26) geneigt ist,
- Inkontaktbringen jeder der mindestens zwei sekundären Kontaktflächen (56a, 56b) mit einer der mindestens zwei primären Kontaktflächen (38a, 38b) durch Drehen der Kegelradeinheit (44) in der Mittelebene des Zahnkranzes (26), bis sich jedes Ende (62a, 62b) der Querwelle (60) axial neben einem der Aufnahmeschlitze (40a, 40b) befindet,
- Bewegen der Enden (62a, 62b) der Querwelle (60) in den zugehörigen Aufnahmeschlitz (40a, 40b) durch Drehen der Kegelradeinheit (44) um eine Achse (A1), die innerhalb der Mittelebene liegt und senkrecht zu der Querwelle (60) ausgerichtet ist.

16. Verfahren zum Zerlegen einer Differentialgetriebeeinheit (20), umfassend:
- Bereitstellen einer Differentialgetriebeanordnung (20) mit einem Zahnkranz (26) mit mindestens zwei primären Kontaktflächen (38a, 38b) mit einer sphärischen Form und zwei Aufnahmeschlitzen (40a, 40b), und einer Kegelradeinheit (44) mit vier Kegelrädern (48a, 48b, 48c, 48d), die auf einem Kegelradträger (46) gestützt sind, wobei zwei der vier Kegelräder (48a, 48b, 48c, 48d) zusätzlich auf einer Querwelle (60) gestützt sind, die sich durch den Kegelradträger (46) hindurch erstreckt, wobei der Kegelradträger (46) mindestens zwei sekundäre Kontaktflächen (56a, 56b) umfasst, die eine sphärische Form aufweisen, wobei jede der sekundären Kontaktflächen (56a, 56b) eine zugehörige primäre Kontaktfläche (38a, 38b) kontaktiert, und wobei ein Ende (62a, 62b) der Querwelle (60) in jedem der zwei Aufnahmeschlitze (40a, 40b) aufgenommen ist,
- Herausbewegen der Enden (62a, 62b) der Querwelle (60) aus dem zugehörigen Aufnahmeschlitz (40a, 40b) durch Drehen der Kegelradeinheit (44) um eine Achse (A1), die innerhalb der Mittelebene liegt und senkrecht zur Querwelle (60) ausgerichtet ist, bis sich jedes Ende (62a, 62b) der Querwelle (60) axial neben einem der Aufnahmeschlitze (40a, 40b) befindet,
- Trennen jeder der mindestens zwei sekundären Kontaktflächen (56a, 56b) von der zugehörigen primären Kontaktfläche (38a, 38b) durch Drehen der Kegelradeinheit (44) in der Mittelebene des Zahnkranzes (26), bis sich jede der sekundären Kontaktflächen (56a, 56b) in einem Winkelabstand von der zugehörigen primären Kontaktfläche (38a, 38b) befindet,
- Zurückziehen der Kegelradeinheit (44) aus dem Inneren Zahnkranzes (26) entlang einer axialen Richtung des Zahnkranzes (26).

## Revendications

1. Ensemble engrenage différentiel (20) comprenant une couronne dentée (26) pouvant tourner autour d'un axe (A) et un groupe d'engrenages coniques (44) avec quatre engrenages coniques (48a, 48b, 48c, 48d) supportés sur un support d'engrenages coniques (46), dans lequel deux des quatre engrenages coniques (48a, 48b, 48c, 48d) sont en outre supportés sur un arbre transversal (60) s'étendant à travers le support d'engrenages coniques (46),
dans lequel la couronne dentée (26) comprend au moins deux surfaces de contact primaires (38a, 38b) de forme sphérique, le support d'engrenages coniques (46) comprend au moins deux surfaces de contact secondaires (56a, 56b) de forme sphérique, et chacune des surfaces de contact secondaires (56a, 56b) entre en contact avec une surface de contact primaire associée (38a, 38b),
**caractérisé en ce que** deux fentes de réception (40a, 40b) sont disposées sur la couronne dentée (26) et une extrémité (62a, 62b) de l'arbre transversal (60) est reçue dans chacune des deux fentes de réception (40a, 40b) de sorte que les extrémités (62a, 62b) et les fentes de réception (40a, 40b) forment un verrouillage positif efficace dans une direction circonférentielle de la couronne dentée (26), et
**en ce qu'**une des fentes de réception (40a, 40b) sépare chacune des au moins deux surfaces de contact primaires (38a, 38b) en deux parties de surface sphérique.

2. Ensemble engrenage différentiel (20) selon la revendication 1, dans lequel chaque surface de contact primaire (38a, 38b) est disposée au niveau d'une extrémité d'un bras de support associé (30a, 30b) de la couronne dentée (26) s'étendant radialement vers l'intérieur.

3. Ensemble engrenage différentiel (20) selon la revendication 2, dans lequel la couronne dentée (26) comprend au moins une nervure de renforcement (70) s'étendant entre une extrémité libre de l'un des bras de support (30a, 30b) et un corps annulaire (28) de la couronne dentée (26).

4. Ensemble engrenage différentiel (20) selon l'une quelconque des revendications précédentes, dans lequel un centre de la forme sphérique des deux surfaces de contact primaires (38a, 38b) se trouve sur l'axe (A).

5. Ensemble engrenage différentiel (20) selon l'une quelconque des revendications précédentes, dans lequel un centre de la forme sphérique des deux surfaces de contact secondaires (56a, 56b) se trouve sur l'axe (A).

6. Ensemble engrenage différentiel (20) selon l'une quelconque des revendications précédentes, dans lequel les extrémités (62a, 62b) de l'arbre transversal (60) sont aplaties latéralement.

7. Ensemble engrenage différentiel (20) selon l'une quelconque des revendications précédentes, dans lequel une ouverture (58a, 58b) est prévue dans chacune des au moins deux surfaces de contact secondaires (56a, 56b) et dans lequel l'arbre transversal (60) s'étend à travers chacune des ouvertures (58a, 58b).

8. Ensemble engrenage différentiel (20) selon la revendication 7, dans lequel les ouvertures (58a, 58b) sont disposées au niveau d'un centre de la surface de contact secondaire associée (56a, 56b).

9. Ensemble engrenage différentiel (20) selon l'une quelconque des revendications précédentes, dans lequel le support d'engrenages coniques (46) comprend quatre surfaces d'appui coniques (54) de forme sphérique, dans lequel chacune des surfaces d'appui coniques (54) est en contact avec l'un des quatre engrenages coniques (48a, 48b, 48c, 48d).

10. Ensemble engrenage différentiel (20) selon l'une quelconque des revendications précédentes, dans lequel une épaisseur de paroi du support d'engrenages coniques (46) varie de 10 % ou moins.

11. Ensemble engrenage différentiel (20) selon l'une quelconque des revendications précédentes, dans lequel une surface d'appui (34) orientée radialement vers l'intérieur est disposée sur la couronne dentée (26).

12. Ensemble engrenage différentiel (20) selon l'une quelconque des revendications précédentes, dans lequel chaque paire constituée d'une surface de contact primaire (38a, 38b) et d'une surface de contact secondaire (56a, 56b) en contact l'une avec l'autre forme un verrouillage positif efficace dans une direction axiale.

13. Ensemble engrenage différentiel (20) selon l'une quelconque des revendications précédentes, dans lequel la couronne dentée (26) est une roue à chaîne ou une roue à courroie ou une roue dentée.

14. Groupe motopropulseur (16) pour un véhicule (10) comprenant un ensemble engrenage différentiel (20) selon l'une quelconque des revendications précédentes.

15. Procédé d'assemblage d'un ensemble engrenage différentiel (20), comprenant :
- la fourniture d'une couronne dentée (26) avec au moins deux surfaces de contact primaires (38a, 38b) ayant une forme sphérique et deux fentes de réception (40a, 40b),
- la fourniture d'un groupe d'engrenages coniques (44) avec quatre engrenages coniques (48a, 48b, 48c, 48d) supportés sur un support d'engrenages coniques (46), dans lequel deux des quatre engrenages coniques (48a, 48b, 48c, 48d) sont également supportés par un arbre transversal (60) s'étendant à travers le support d'engrenages coniques (46), dans lequel le support d'engrenages coniques (46) comprend au moins deux surfaces de contact secondaires (56a, 56b) de forme sphérique,
- la disposition du groupe d'engrenages coniques (44) dans un intérieur de la couronne dentée (26) de telle sorte que chacune des surfaces de contact secondaires (56a, 56b) soit située à une distance angulaire de la surface de contact primaire associée (38a, 38b) et que l'arbre transversal (60) soit incliné par rapport à un plan médian de la couronne dentée (26),
- le fait d'amener chacune des au moins deux surfaces de contact secondaires (56a, 56b) en contact avec l'une des au moins deux surfaces de contact primaires (38a, 38b) en faisant tourner le groupe d'engrenages coniques (44) dans le plan médian de la couronne dentée (26) jusqu'à ce que chaque extrémité (62a, 62b) de l'arbre transversal (60) soit située axialement adjacente à l'une des fentes de réception (40a, 40b),
- le déplacement des extrémités (62a, 62b) de l'arbre transversal (60) dans la fente de réception associée (40a, 40b) en faisant tourner le groupe d'engrenages coniques (44) autour d'un axe (A1) situé à l'intérieur du plan médian et orienté perpendiculairement à l'arbre transversal (60).

16. Procédé de désassemblage d'un ensemble engrenage différentiel (20), comprenant :
- la fourniture d'un ensemble engrenage différentiel (20) avec une couronne dentée (26) avec au moins deux surfaces de contact primaires (38a, 38b) ayant une forme sphérique et deux fentes de réception (40a, 40b), et un groupe d'engrenages coniques (44) avec quatre engrenages coniques (48a, 48b, 48c, 48d) supportés sur un support d'engrenages coniques (46), dans lequel deux des quatre engrenages coniques (48a, 48b, 48c, 48d) sont en outre supportés sur un arbre transversal (60) traversant le support d'engrenages coniques (46), dans lequel le support d'engrenages coniques (46) comprend au moins deux surfaces de contact secondaires (56a, 56b) de forme sphérique, dans lequel chacune des surfaces de contact secondaires (56a, 56b) est en contact avec une surface de contact primaire associée (38a, 38b), et dans lequel une extrémité (62a, 62b) de l'arbre transversal (60) est reçue dans chacune des deux fentes de réception (40a, 40b),
- le déplacement des extrémités (62a, 62b) de l'arbre transversal (60) hors de la fente de réception associée (40a, 40b) en faisant tourner le groupe d'engrenages coniques (44) autour d'un axe (A1) situé à l'intérieur du plan médian et orienté perpendiculairement à l'arbre transversal (60), jusqu'à ce que chaque extrémité (62a, 62b) de l'arbre transversal (60) soit située axialement adjacente à l'une des fentes de réception (40a, 40b),
- la séparation de chacune des au moins deux surfaces de contact secondaires (56a, 56b) de la surface de contact primaire associée (38a, 38b) en faisant tourner le groupe d'engrenages coniques (44) dans le plan médian de la couronne dentée (26), jusqu'à ce que chacune des surfaces de contact secondaires (56a, 56b) soit située à une distance angulaire de la surface de contact primaire associée (38a, 38b),
- le retrait du groupe d'engrenages coniques (44) de l'intérieur de la couronne dentée (26) le long d'une direction axiale de la couronne dentée (26).
